# EUROPÄISCHE PATENTSCHRIFT

(11) **EP 4 073 386 B1**
(45) Veröffentlichungstag und Bekanntmachung des Hinweises auf die Patenterteilung: **11.09.2024**
(21) Anmeldenummer: 20823776.8
(22) Anmeldetag: 09.12.2020
(51) Int. Cl.: F04D 15/02, F04D 27/02, F04B 49/02, F04B 49/06, F04B 49/10

(54) **VERFAHREN ZUM BETREIBEN EINER PUMPE**
METHOD FOR OPERATING A PUMP
PROCÉDÉ DE FONCTIONNEMENT D'UNE POMPE

(30) Priorität: 10.12.2019 DE 102019219217
(43) Veröffentlichungstag der Anmeldung: 19.10.2022
(73) Patentinhaber: Robert Bosch GmbH, 70442 Stuttgart (DE)
(72) Erfinder: HOFACKER, Volker, 77833 Ottersweier (DE); ECKERT, Michael, 77855 Achern (DE)
(86) Internationale Anmeldenummer: PCT/EP2020/085176
(87) Internationale Veröffentlichungsnummer: WO 2021/116141

(56) Entgegenhaltungen:
- EP-A1- 1 364 825
- DE-A1- 4 040 847
- US-A1- 2008 310 967

## Beschreibung

Die Erfindung betrifft ein Verfahren zum Betreiben einer Fluidfördereinrichtung, insbesondere einer Pumpe, eines Kompressors, eines Lüfters oder eines Ventils.

Des Weiteren betrifft die Erfindung eine Pumpenanordnung, eine Kompressoranordnung, eine Lüfteranordnung, eine Ventilanordnung, ein Steuergerät, ein Computerprogramm sowie ein maschinenlesbares Speichermedium.

### Stand der Technik

In unterschiedlichen technischen Bereichen, wie beispielsweise in Fahrzeugen, werden Kühlkreisläufe eingesetzt, um eine oder mehrere Komponenten thermisch zu regeln. Derartige Kühlkreisläufe werden oftmals durch drehzahlgeregelte, elektrische Zusatzwasserpumpen zusätzlich zu einer Hauptwasserpumpe unterstützt oder bei einem Ausfall der Hauptwasserpumpe eingesetzt.

Die Zusatzwasserpumpe wird durch ein zentrales Steuergerät gesteuert und mit Spannung versorgt. Ist die Zusatzwasserpumpe mit Spannung versorgt, stellt diese die vom zentralen Steuergerät empfangene Solldrehzahl ein. Wird die Kommunikation zwischen dem zentralen Steuergerät und der Zusatzwasserpumpe unterbrochen, wird die Zusatzwasserpumpe in einen Notlauf versetzt. Im Notlauf der Zusatzwasserpumpe wird zum Aufrechterhalten einer Kühlfunktion des Kühlkreislaufs und zum Kompensieren eines eventuellen Ausfalls der Hauptwasserpumpe eine Maximaldrehzahl eingestellt.

Bei der Herstellung und Montage des Kühlkreislaufs kann die Zusatzwasserpumpe noch bevor der Kühlkreislauf mit einem Kühlmittel gefüllt ist mit Spannung versorgt werden. Dieser Prozess erfolgt ohne eine Kommunikation mit dem zentralen Steuergerät, wodurch die Zusatzwasserpumpe in den Notlauf versetzt wird. Durch ein Betreiben der trockenen Zusatzwasserpumpe mit der Maximaldrehzahl kann die Zusatzwasserpumpe beschädigt werden und eine erhöhte Geräuschentwicklung aufweisen.

Die EP 1364825 A1 offenbart ein Elektromotor, der in einem Notfallbetriebsmodus und einem Normalbetriebsmodus betrieben werden kann.

### Offenbarung der Erfindung

Die der Erfindung zugrunde liegende Aufgabe kann darin gesehen werden, ein Verfahren zum Betreiben einer Fluidfördereinrichtung, insbesondere einer Pumpe, eines Lüfters, eines Ventils oder eines Kompressors vorzuschlagen, welches ein Aktivieren des Notlaufs während der Montage der Fluidfördereinrichtung verhindert.

Diese Aufgabe wird mittels des jeweiligen Gegenstands der unabhängigen Ansprüche gelöst. Vorteilhafte Ausgestaltungen der Erfindung sind Gegenstand von jeweils abhängigen Unteransprüchen.

Nach einem Aspekt der Erfindung wird ein Verfahren zum Betreiben einer Fluidfördereinrichtung bereitgestellt. Das Verfahren kann durch ein Steuergerät bzw. eine Steuereinheit durchgeführt werden, welche in die Fluidfördereinrichtung integriert ist. Die fluidfördereinrichtungsseitige Steuereinheit kann mit einem zentralen Steuergerät über ein Kommunikationsinterface kommunizieren und somit Steueranweisungen empfangen und ausführen.

Die Fluidfördereinrichtung wird mit einem deaktivierten Notlauf mindestens bei einem erstmaligen Anlegen einer Betriebsleistung der Fluidfördereinrichtung eingeschaltet. Die fluidfördereinrichtungsseitige Steuereinheit kann hierdurch ein Hochdrehen der Fluidfördereinrichtung,

insbesondere, wenn diese als Pumpe, Kompressor oder Lüfter ausgeführt ist, oder ein Verstellen der Fluidfördereinrichtung, insbesondere, wenn diese als Ventil ausgeführt ist, ohne eine eingerichtete Kommunikationsverbindung zum zentralen Steuergerät unterbinden. Ein erstmaliges Anlegen der Betriebsleistung kann beispielsweise durch ein Auslesen einer Speichereinheit durch die Steuereinheit erkannt werden. Bei einem erstmaligen Anlegen der Betriebsspannung kann die Speichereinheit leer sein oder einen Vermerk über eine erstmalige Inbetriebnahme aufweisen.

In einem weiteren Schritt wird eine Solldrehzahlvorgabe oder Sollstellwertvorgabe an die Fluidfördereinrichtung übermittelt. Die Solldrehzahlvorgabe oder Sollstellwertvorgabe kann hierbei von der fluidfördereinrichtungsseitigen Steuereinheit generiert oder von dem zentralen Steuergerät empfangen und durch die fluidfördereinrichtungsseitige Steuereinheit an die Fluidfördereinrichtung weitergeleitet werden.

Anschließend wird der Notlauf der Fluidfördereinrichtung aktiviert, wenn die Solldrehzahlvorgabe oder Sollstellwertvorgabe einen Auslösewert überschreitet oder die Fluidfördereinrichtung länger als eine Aktivierungsdauer mit einer ungültigen Solldrehzahl, insbesondere Solldrehzahlvorgabe, oder Sollstellwertvorgabe betrieben wird. Durch diese Maßnahme kann der Notlauf der Fluidfördereinrichtung erst dann aktiviert werden, wenn die Fluidfördereinrichtung mit einer ausreichend hohen Solldrehzahl, insbesondere Solldrehzahlvorgabe, oder Sollstellwertvorgabe betrieben wird.

Alternativ oder zusätzlich kann der Notlauf der Fluidfördereinrichtung aktiviert werden, wenn die Fluidfördereinrichtung während einer vordefinierten Aktivierungsdauer mit einer ungültigen Drehzahl, insbesondere Solldrehzahlvorgabe, oder einer ungültigen Sollstellwertvorgabe betrieben wird.

Der Notlauf bewirkt insbesondere, dass die Fluidfördereinrichtung mit einer maximalen Drehzahl betrieben wird. Vorzugsweise wird die Fluidfördereinrichtung mit maximaler Leistung angesteuert. Vorteilhaft ist, dass durch das ansteuern mit maximaler Drehzahl oder Leistung mögliche Verstopfungen und damit beispielsweise Verunreinigungen beseitigen lassen. Ist die Verunreinigung beseitig wird vorzugsweise der Notlauf beendet. Bei einem Ventil kann der Notlauf eingesetzt werden um Verstopfungen freizugeben. Insbesondere kann das Ventil mehrmals zumindest teilweise auf und zu fahren. Die Drehzahl der Fluidfördereinrichtung kann hierbei mit der Solldrehzahlvorgabe verglichen werden, wobei eine Abweichung unter Berücksichtigung von Toleranzen in einer ungültigen Drehzahl der Fluidfördereinrichtung resultiert. Die Aktivierungsdauer kann eine definierte Zeitdauer sein, durch welche kurzzeitige Abweichungen der Drehzahl der Fluidfördereinrichtung von der Solldrehzahlvorgabe kompensierbar sind.

Durch das Aktivieren des Notlaufs wird ein Versetzen der Fluidfördereinrichtung in einen Notlaufbetrieb ermöglicht bzw. zugelassen.

Gemäß einem Ausführungsbeispiel ist die Fluidfördereinrichtung als Pumpe ausgebildete. Bei einem Einbau bzw. einer Montage der Pumpe im Werk kann die Pumpe noch vor Befüllung eines Kühlkreislaufes mit Spannung versorgt werden, ohne dass das zentrale Steuergerät bereits eine gültige Solldrehzahl vorgibt. Durch das Verfahren und die Steuereinheit können ein Aktivieren des Notlaufs der Pumpe und ein schädliches Trockenlaufen der Pumpe unterbunden werden. Insbesondere kann der Notlauf der Pumpe erst nach Empfang einer gültigen Solldrehzahlvorgabe des übergeordneten bzw. zentralen Steuergerätes aktiviert werden.

Gemäß einem weiteren Ausführungsbeispiel ist die Fluidfördereinrichtung als Lüfter ausgebildet. Bei einem Einbau bzw. einer Montage des Lüfters im Werk kann Lüfter mit Spannung versorgt werden, ohne dass das zentrale Steuergerät bereits eine gültige Solldrehzahl vorgibt. Durch das Verfahren und die Steuereinheit können ein Aktivieren des Notlaufs des Lüfters und ein schädliches Überdrehen oder Anlaufen des Lüfters unterbunden werden. Insbesondere kann der Notlauf erst nach Empfang einer gültigen Solldrehzahlvorgabe des übergeordneten bzw. zentralen Steuergerätes aktiviert werden.

Gemäß einem Ausführungsbeispiel ist die Fluidfördereinrichtung als Kompressor ausgebildete. Bei einem Einbau bzw. einer Montage des Kompressors im Werk kann der Kompressor noch vor Befüllung eines Fluidkreislaufs, insbesondere Kältemittelkreislauf, mit Spannung versorgt werden, ohne dass das zentrale Steuergerät bereits eine gültige Solldrehzahlvorgabe vorgibt. Durch das Verfahren und die Steuereinheit können ein Aktivieren des Notlaufs des Kompressors und ein schädliches Trockenlaufen des Kompressors unterbunden werden. Insbesondere kann der Notlauf des Kompressors erst nach Empfang einer gültigen Solldrehzahlvorgabe des übergeordneten bzw. zentralen Steuergerätes aktiviert werden.

Gemäß einem Ausführungsbeispiel ist die Fluidfördereinrichtung als Ventil ausgebildete. Bei einem Einbau bzw. einer Montage des Ventils im Werk kann das Ventil mit Spannung versorgt werden, ohne dass das zentrale Steuergerät bereits eine gültige Solldrehzahlvorgabe vorgibt. Durch das Verfahren und die Steuereinheit können ein Aktivieren des Notlaufs des Ventils unterbunden werden

Insbesondere kann der Notlauf des Ventils erst nach Empfang einer gültigen Sollstellwertvorgabe des übergeordneten bzw. zentralen Steuergerätes aktiviert werden.

Die Solldrehzahlvorgabe liegt vorzugsweise über einer zuvor definierten Schwelle. Wird die Fluidfördereinrichtung von der Spannungsversorgung getrennt, ist der Notlauf nach Wiederanlegen der Spannung an der Fluidfördereinrichtung erneut deaktiviert. Die Deaktivierung des Notlaufs durch die fluidfördereinrichtungsseitige Steuereinheit dient somit als Schutzmechanismus der Fluidfördereinrichtung gegen ein unbeabsichtigtes Trockenlaufen, bei einer Ausbildung als Pumpe oder Kompressor, oder Überdrehen, bei einer Ausbildung als Lüfter, oder Öffnen oder Schließen des Ventils mit hoher Drehzahl.

Die Fluidfördereinrichtung kann beispielsweise eine Kühlmittelpumpe oder eine Zusatzwasserpumpe sein. Insbesondere kann die Fluidfördereinrichtung dazu eingerichtet sein, eine beliebige Flüssigkeit zu fördern oder zu regulieren und ist nicht auf den automobilen Einsatzbereich beschränkt.

Nach einem weiteren Aspekt der Erfindung wird eine Steuereinheit bereitgestellt, wobei die Steuereinheit dazu eingerichtet ist, das Verfahren auszuführen. Die Steuereinheit kann beispielsweise eine fluidfördereinrichtungsseitige Steuereinheit sein, welche in die Fluidfördereinrichtung integriert ist. Beispielsweise kann die Steuereinheit mit einer Fluidfördereinrichtungssteuerung kombiniert oder mit der Fluidfördereinrichtungssteuerung gekoppelt sein.

Vorzugsweise kann die fluidfördereinrichtungsseitige Steuereinheit über eine Kommunikationsverbindung mit einem zentralen Steuergerät koppelbar sein, um Solldrehzahlvorgaben empfangen und ausführen zu können.

Darüber hinaus wird nach einem Aspekt der Erfindung ein Computerprogramm bereitgestellt, welches Befehle umfasst, die bei der Ausführung des Computerprogramms durch einen Computer oder ein Steuergerät diesen veranlassen, das erfindungsgemäße Verfahren auszuführen. Gemäß einem weiteren Aspekt der Erfindung wird ein maschinenlesbares Speichermedium bereitgestellt, auf dem das erfindungsgemäße Computerprogramm gespeichert ist.

Gemäß einem Ausführungsbeispiel wird ein Betriebsmodus der Fluidfördereinrichtung während des Betriebs der Fluidfördereinrichtung in einer internen Speichereinheit hinterlegt. Bevorzugterweise wird der interne Speicher bei einem Aktivieren der Fluidfördereinrichtung zum Einstellen eines zuletzt verwendeten Betriebsmodus ausgelesen. Der Betriebsmodus der Fluidfördereinrichtung kann insbesondere in aktivierter oder deaktivierter Notlauf sein. Bei einem aktivierten Notlauf kann die Fluidfördereinrichtung in einen Notlaufbetrieb versetzt werden. Bei einem deaktivierten Notlauf ist ein Versetzen der Fluidfördereinrichtung in einen Notlaufbetrieb nicht möglich. Der Betriebsmodus kann darüber hinaus in Form eines Eintrags für eine erste Inbetriebnahme der Fluidfördereinrichtung ausgestaltet sein.

Der interne Speicher kann beispielsweise in der fluidfördereinrichtungsseitigen Steuereinheit integriert oder mit der fluidfördereinrichtungsseitigen Steuereinheit verbindbar sein.

Insbesondere kann in dem internen Speicher der zuletzt eingesetzte Zustand des Notlaufs, aktivierter Notlauf oder deaktivierter Notlauf, hinterlegt sein und somit beispielsweise ein unbeabsichtigter Trockenlauf der Pumpe oder des Kompressors verhindern.

Durch diese Maßnahme ist die Notlauffunktion der Fluidfördereinrichtung gewährleistet, falls sich beispielsweise ein die Fluidfördereinrichtung aufweisendes Fahrzeug bereits im Feld befindet und die als Kühlmittelpumpe ausgestaltete Fluidfördereinrichtung vorher mit einem befüllten Kühlkreislauf aktiviert wurde.

Nach einer weiteren Ausführungsform wird ein Notlauf der Fluidfördereinrichtung eingeschaltet, wenn die Solldrehzahl, insbesondere die Solldrehzahlvorgabe, der Fluidfördereinrichtung den Auslösewert übersteigt. Beispielsweise kann der Auslösewert ein definiertes Drehzahlniveau aufweisen, welcher nur durch eine aktive Ansteuerung des zentralen Steuergeräts erreicht werden kann.

Es können somit ein unbeabsichtigtes Beaufschlagen der Fluidfördereinrichtung mit Spannung und ein Erzielen einer geringfügigen Drehzahl nicht in einer Aktivierung der Notlauffunktion der Fluidfördereinrichtung resultieren.

Bei einer weiteren vorteilhaften Ausgestaltung wird der Notlauf der Fluidfördereinrichtung durch das zentrale Steuergerät oder die fluidfördereinrichtungsseitige Steuereinheit eingeleitet. Insbesondere kann der Notlauf der Fluidfördereinrichtung nur bzw. ausschließlich durch das zentrale Steuergerät oder die fluidfördereinrichtungnseitige Steuereinheit eingeleitet werden. Durch diese Maßnahme kann der Notlauf gezielt durch einen Steuerbefehl des zentralen Steuergeräts oder der fluidfördereinrichtungsseitigen Steuereinheit aktiviert werden.

Gemäß einem weiteren Ausführungsbeispiel wird bei einem aktivierten Notlauf der Fluidfördereinrichtung eine Notlaufdrehzahl, beispielsweise in Form einer Nenndrehzahl oder Maximaldrehzahl, der Fluidfördereinrichtung eingestellt. Wird die Fluidfördereinrichtung in einen Notlaufbetrieb versetzt bzw. versetzt sich die Fluidfördereinrichtung in einen Notlaufbetrieb, erfolgt eine ungeregelte Förderleistung mit einer maximalen Drehzahl oder Nenndrehzahl um die vorgesehene Förderaufgabe ohne Rücksicht auf Energieeinsparungen zu erfüllen. Hierdurch wird sichergestellt, dass eine beispielhafte Kühlmittelpumpe die Komponenten, welche thermisch mit dem Kühlkreislauf gekoppelt sind, ausreichend kühlt.

Nach einem weiteren Aspekt der Erfindung wird eine Pumpenanordnung bereitgestellt. Die Pumpenanordnung weist mindestens eine als Pumpe ausgebildete Fluidfördereinrichtung und eine mit der Pumpe verbundene Steuereinheit zum Ansteuern und/oder Regeln der Pumpe auf. Die Pumpenanordnung ist dazu eingerichtet, das erfindungsgemäße Verfahren auszuführen.

Nach einem weiteren Aspekt der Erfindung wird eine Ventilanordnung bereitgestellt. Die Ventilanordnung weist mindestens eine als Ventil ausgebildete Fluidfördereinrichtung und eine mit dem Ventil verbundene Steuereinheit zum Ansteuern und/oder Regeln des Ventils auf. Die Ventilanordnung ist dazu eingerichtet, das erfindungsgemäße Verfahren auszuführen.

Nach einem weiteren Aspekt der Erfindung wird eine Kompressoranordnung bereitgestellt. Die Kompressoranordnung weist mindestens eine als Kompressor ausgebildete Fluidfördereinrichtung und eine mit dem Kompressor verbundene Steuereinheit zum Ansteuern und/oder Regeln des Kompressors auf. Die Kompressoranordnung ist dazu eingerichtet, das erfindungsgemäße Verfahren auszuführen.

Nach einem weiteren Aspekt der Erfindung wird eine Lüfteranordnung bereitgestellt. Die Lüfteranordnung weist mindestens eine als Lüfter ausgebildete Fluidfördereinrichtung und eine mit dem Lüfter verbundene Steuereinheit zum Ansteuern und/oder Regeln des Lüfters auf. Die Lüfteranordnung ist dazu eingerichtet, das erfindungsgemäße Verfahren auszuführen.

Des Weiteren kann die fluidfördereinrichtungsseitige Steuereinheit über eine Kommunikationsverbindung mit einem zentralen Steuergerät gekoppelt sein, um Steuerbefehle oder Solldrehzahlvorgaben an die Fluidfördereinrichtung weiterzuleiten.

Die Pumpenanordnung kann beispielsweise als eine an einen Kühlkreislauf angeschlossene, Kühlmittelpumpe mit einer Steuereinheit und einem optionalen zentralen Steuergerät ausgestaltet sein.

Die Pumpe, das Ventil, der Kompressor können insbesondere Teil eines Kältemittelkreislaufes sein, wobei sie für die Zirkulation des Kältemittels zuständig sind.

Im Folgenden werden anhand von stark vereinfachten schematischen Darstellungen bevorzugte Ausführungsbeispiele der Erfindung näher erläutert. Hierbei zeigen
- Fig. 1: eine schematische Darstellung einer Pumpenanordnung gemäß einer Ausführungsform und
- Fig. 2: ein schematisches Ablaufdiagramm zum Veranschaulichen eines Verfahrens gemäß einer Ausführungsform.

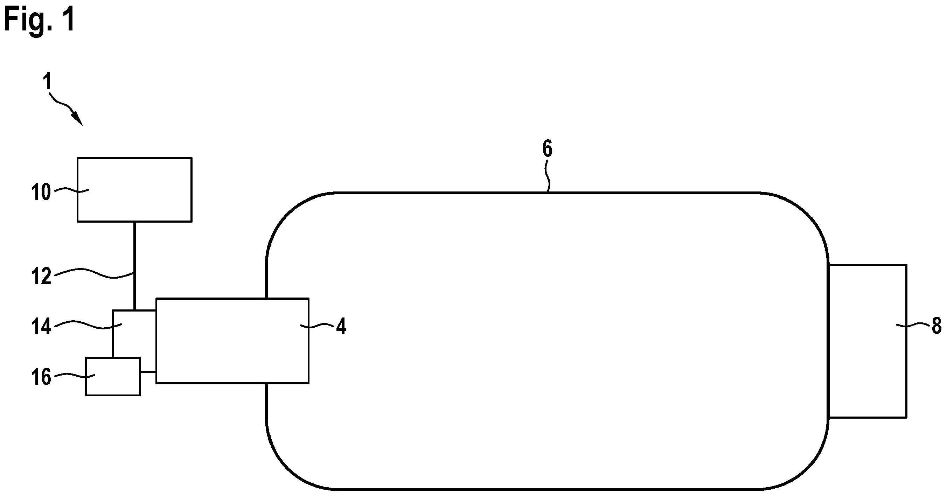

Die Figur 1 zeigt eine schematische Darstellung einer Fluidförderanordnung 1 gemäß einer Ausführungsform. Die Fluidförderanordnung 1 dient zum Ausführen eines Verfahrens 2 zum Betreiben einer Fluidfördereinrichtung 4.

Die Fluidfördereinrichtung 4 ist im dargestellten Ausführungsbeispiel als eine Kühlwasserpumpe oder als eine Zusatzwasserpumpe ausgestaltet und ist an einem Kühlkreislauf 6 angeordnet.

Die als Pumpe ausgebildete Fluidfördereinrichtung 4 kann somit ein im Fluidkreislauf 6, insbesondere Kältemittelkreislauf oder Kühlmittelkreislauf, befindliches Fluid, insbesondere Kühlmittel oder Kältemittel, fördern und eine Zirkulation des Fluids ermöglichen. Der Fluidkreislauf 6 ist vereinfacht dargestellt, sodass beispielsweise Kühler, Verbindungen, Ventile, Wärmetauscher und mehrere zu kühlende Komponenten nicht dargestellt sind.

An den Fluidkreislauf 6 ist beispielhaft eine zu kühlende oder erwärmende Komponente 8 thermisch gekoppelt. Die Komponente 8 kann beispielsweise eine Leistungselektronik oder ein Ölkühler sein.

Die Fluidförderanordnung, insbesondere die Pumpenanordnung 1, Ventilanordnung, Kompressoranordnung, Lüfteranordnung, weist ein zentrales Steuergerät 10 auf, welches dazu eingerichtet ist, Steuerbefehle an die Fluidfördereinrichtung, insbesondere die Pumpe 4 zu übermitteln. Beispielsweise kann das zentrale Steuergerät 10 Solldrehzahlvorgaben an die Fluidfördereinrichtung, insbesondere die Pumpe 4 übermitteln. Hierzu kann das zentrale Steuergerät 10 die Steuerbefehle über eine Kommunikationsverbindung 12 an eine fluidfördereinrichtungsseitige Steuereinheit 14 übermitteln.

Die fluidfördereinrichtungsseitige Steuereinheit 14 kann die empfangenen Steuerbefehle zum Ansteuern der Fluidfördereinrichtung, insbesondere die Pumpe 4 nutzen und somit die Fluidfördereinrichtung, insbesondere die Pumpe 4 auf eine gewünschten Drehzahl regeln.

Die Kommunikationsverbindung 12 kann neben dem Übermitteln von Steuerbefehlen auch zum Versorgen der Fluidfördereinrichtung 4 und der fluidfördereinrichtungsseitigen Steuereinheit 14 mit Betriebsleistung bzw. elektrischer Energie dienen.

Die fluidfördereinrichtungsseitige Steuereinheit 14 weist eine Speichereinheit 16. In der Speichereinheit 16 können zuletzt eingesetzte Betriebsmodi der Fluidfördereinrichtung 4 hinterlegt sein.

Insbesondere kann durch die Steuereinheit 14 ein initiales Aktivieren der Fluidfördereinrichtung 4 in einem Notlaufbetrieb unterbunden werden.

Ferner kann generell ein Anlaufen unterbunden werden, wenn der Notlauf deaktiviert ist. Erst mit aktivieren des Notlaufs ist auch ein Anlaufen möglich. Ein solches generelles Unterbinden des Anlaufens ist insbesondere bei Lüftern sinnvoll, da diese bei einem ungewollten Anlaufen, insbesondere in der Montage ungewünschte Folgen haben kann. Das unterbinden des Anlaufens ist insbesondere bei einer eingeschalteten Fluidfördereinrichtung möglich.

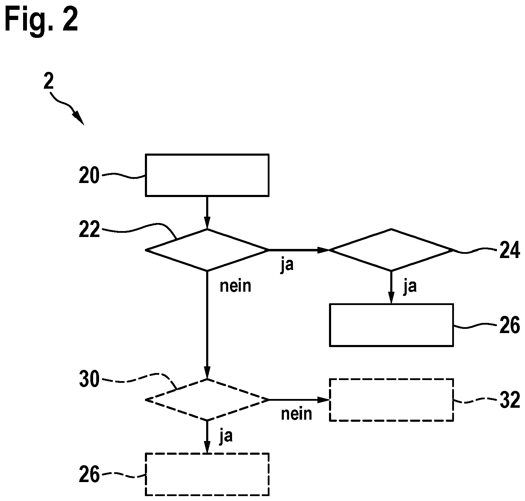

In der Figur 2 ist ein schematisches Ablaufdiagramm zum Veranschaulichen eines Verfahrens 2 gemäß einer Ausführungsform dargestellt. Das Verfahren 2 dient zum Betreiben einer Fluidfördereinrichtung 4, insbesondere einer Pumpe, vorzugsweise einer elektronisch drehzahlgeregelten Zusatzwasserpumpe, oder insbesondere eines Ventils, eines Lüfters, eines Kompressors durch die Steuereinheit 14.

In einem Schritt 20 wird die Fluidfördereinrichtung 4 mit einem deaktivierten Notlauf bei einem zumindest erstmaligen Anlegen einer Betriebsleistung der Fluidfördereinrichtung 4 eingeschaltet.

In einem weiteren Schritt 22 kann durch die Steuereinheit 14 geprüft werden, ob die Fluidfördereinrichtung 4 mit einer gültigen Drehzahl betrieben wird, welche einer vorgegebenen Solldrehzahl, insbesondere Solldrehzahlvorgabe, entspricht. Wird die Fluidfördereinrichtung 4 mit einer Drehzahl entsprechend der Solldrehzahl, insbesondere der Solldrehzahlvorgabe, betrieben, kann die eingestellte Solldrehzahl, insbesondere die Solldrehzahlvorgabe, mit einer vordefinierten Aktivierungsschwelle verglichen werden (Schritt 24). Übersteigt die Solldrehzahl, insbesondere Solldrehzahlvorgabe, der Fluidfördereinrichtung 4 die Aktivierungsschwelle, so kann ein Notlauf der Fluidfördereinrichtung 4 durch die Steuereinheit 14 aktiviert werden (Schritt 26). Gleiches gilt bei der Ausführung als Ventil bezüglich der Sollstellwertvorgabe.

Bei einem aktivierten Notlauf der Fluidfördereinrichtung 4 kann die Fluidfördereinrichtung 4 bei einer abgebrochenen Kommunikationsverbindung 12 automatisiert in den Notlaufbetrieb versetzt werden. Durch das Aktivieren des Notlaufs wird der Fluidfördereinrichtung 4 die Möglichkeit eingeräumt, in einen Notlaufbetrieb versetzt zu werden.

Wird bei der Abfrage 22 eine Abweichung der Drehzahl von der Solldrehzahlvorgabe ermittelt, so kann die Zeit bzw. eine Aktivierungsdauer gemessen werden (Schritt 30), während welcher die Fluidfördereinrichtung 4 mit einer ungültigen Drehzahl oder einem ungültigen Stellwert betrieben wird.

Unter einer ungültigen Drehzahl wird insbesondere verstanden, dass die Drehzahl nicht der Solldrehzahlvorgabe entspricht. Dies kann insbesondere daran liegen, dass nicht ausreichend Fluid in der Fluidfördereinrichtung vorhanden ist, oder dass die Fluidfördereinrichtung verstopft ist. Auch ist möglich, dass die Fluidfördereinrichtung nicht richtig angeschlossen ist, und ein fehlerhaftes Signal erhält. Die tatsächliche Drehzahl kann insbesondere mittels eine Sensors oder eines Verfahrens zur Ermittlung der Drehposition erfasst werden.

Unter einem ungültigen Stellwert wird insbesondere verstanden, dass der Stellwert nicht der Sollstellwertvorgabe entspricht. Dies kann insbesondere bei einer Verschmutzung der Fall, sein, wenn der Stellweg hierdurch versperrt ist. Wird die Aktivierungsdauer nicht überschritten, kann die Drehzahl oder der Stellwert der Fluidfördereinrichtung 4 auf die Solldrehzahlvorgabe oder Sollstellwertvorgabe eingestellt werden (Schritt 32).

Der Notlauf der Fluidfördereinrichtung kann aktiviert werden (Schritt 26), wenn die Fluidfördereinrichtung während einer vordefinierten Aktivierungsdauer mit einer ungültigen Drehzahl, insbesondere Solldrehzahlvorgabe, oder einer ungültigen Sollstellwertvorgabe betrieben wird.

Ist der Notlauf aktiviert und wird die Aktivierungsdauer überschritten, wird die Fluidfördereinrichtung 4 in einen Notlaufbetrieb versetzt.

Bei einem nicht aktiven Notlauf der Fluidfördereinrichtung 4 wird die Fluidfördereinrichtung 4 insbesondere deaktiviert oder die Fluidfördereinrichtung ohne Notlauf weiter betrieben.

Der Notlauf, insbesondere der Notlaufbetrieb, wird vorzugsweise alternativ und/oder zusätzlich eingeschaltet, wenn er aktiviert ist und wenn keine Solldrehzahlvorgabe oder Sollstellwertvorgabe vorliegt.

Die Aktivierungsdauer beträgt insbesondere 1 bis 15 Sekunden, vorzugsweise 3 bis 10 Sekunden, beispielsweise 4 Sekunden.

Alternativ ist ein Anlaufen der Fluidfördereinrichtung bei deaktiviertem Notlauf nicht möglich.

Unter Fluide werden Flüssigkeiten, insbesondere Kühlmittel oder Kältemittel, und Gase, insbesondere Luft, verstanden.

## Patentansprüche

1. Verfahren (2) zum Betreiben einer Fluidfördereinrichtung (4), insbesondere einer Pumpe, eines Lüfters, eines Kompressors oder eines Ventils, durch eine Steuereinheit (14), wobei
- die Fluidfördereinrichtung (4) mit einem deaktivierten Notlauf mindestens bei einem erstmaligen Anlegen einer Betriebsleistung an die Fluidfördereinrichtung (4) eingeschaltet wird,
- eine Solldrehzahlvorgabe oder Sollstellwertvorgabe von einem zentralen Steuergerät (10) empfangen und an die Fluidfördereinrichtung (4) übermittelt wird,
- der Notlauf der Fluidfördereinrichtung (4) aktiviert wird, wenn die Solldrehzahlvorgabe oder die Sollstellwertvorgabe einen Auslösewert überschreitet oder die Fluidfördereinrichtung (4) länger als eine Aktivierungsdauer mit einer ungültigen Drehzahl oder mit einem ungültigen Stellwert betrieben wird.

2. Verfahren nach Anspruch 1, wobei ein Betriebsmodus der Fluidfördereinrichtung (4) während des Betriebs der Fluidfördereinrichtung (4) in einer internen Speichereinheit (16) hinterlegt wird, wobei die interne Speichereinheit (16) bei einem Aktivieren der Fluidfördereinrichtung (4) zum Einstellen eines zuletzt verwendeten Betriebsmodus der Fluidfördereinrichtung (4) ausgelesen wird.

3. Verfahren nach Anspruch 1 oder 2, wobei ein Notlauf der Fluidfördereinrichtung (4) eingeschaltet wird, wenn die Solldrehzahlvorgabe oder die Sollstellwertvorgabe der Fluidfördereinrichtung (4) den Auslösewert übersteigt.

4. Verfahren nach einem der Ansprüche 1 bis 3, wobei der Notlauf der Fluidfördereinrichtung (4) durch das zentrale Steuergerät (10) oder die Steuereinheit (14) eingeleitet wird.

5. Verfahren nach einem der Ansprüche 1 bis 4, wobei bei einem aktivierten Notlauf der Fluidfördereinrichtung (4) eine Notlaufdrehzahl, beispielsweise in Form einer Nenndrehzahl oder Maximaldrehzahl der Fluidfördereinrichtung (4), eingestellt wird.

6. Pumpenanordnung (1), aufweisend mindestens eine als Pumpe (4) ausgebildete Fluidfördereinrichtung und eine mit der Pumpe (4) verbundene Steuereinheit (14) zum Ansteuern und/oder Regeln der Pumpe (4), wobei die Pumpenanordnung (1) dazu eingerichtet ist, das Verfahren (2) gemäß einem der vorhergehenden Ansprüche auszuführen.

7. Ventilanordnung, aufweisend mindestens eine als Ventil ausgebildete Fluidfördereinrichtung und eine mit dem Ventil verbundene Steuereinheit (14) zum Ansteuern und/oder Regeln des Ventils, wobei die Ventilanordnung dazu eingerichtet ist, das Verfahren (2) gemäß einem der Ansprüche 1 bis 5 auszuführen.

8. Kompressoranordnung, aufweisend mindestens einen als Kompressor ausgebildete Fluidfördereinrichtung und eine mit dem Kompressor verbundene Steuereinheit (14) zum Ansteuern und/oder Regeln des Kompressors, wobei die Kompressoranordnung dazu eingerichtet ist, das Verfahren (2) gemäß einem der Ansprüche 1 bis 5 auszuführen.

9. Lüfteranordnung, aufweisend mindestens einen als Lüfter ausgebildete Fluidfördereinrichtung und eine mit dem Lüfter verbundene Steuereinheit (14) zum Ansteuern und/oder Regeln des Lüfters, wobei die Lüfteranordnung dazu eingerichtet ist, das Verfahren (2) gemäß einem der Ansprüche 1 bis 5 auszuführen.

10. Steuereinheit (14), wobei die Steuereinheit (14) dazu eingerichtet ist, das Verfahren (2) gemäß einem der Ansprüche 1 bis 5 auszuführen.

11. Computerprogramm, welches Befehle umfasst, die bei der Ausführung des Computerprogramms durch einen Computer oder eine Steuereinheit (14) diesen veranlassen, das Verfahren (2) gemäß einem der Ansprüche 1 bis 5 auszuführen.

12. Maschinenlesbares Speichermedium, auf welchem das Computerprogramm gemäß Anspruch 11 gespeichert ist.

## Claims

1. Method (2) for operating a fluid delivery device (4), in particular a pump, a fan, a compressor or a valve, via a control module (14), wherein
- the fluid delivery device (4) is switched on with the emergency mode deactivated, at least when an operating power is applied to the fluid delivery device (4) for the first time,
- a setpoint speed selection or setpoint control-value selection is received by a central control unit (10) and transmitted to the fluid delivery device (4),
- the emergency mode of the fluid delivery device (4) is activated if the setpoint speed selection or the setpoint control-value selection exceeds a trigger value or the fluid delivery device (4) is operated at an invalid speed or with an invalid control value for longer than an activation time.

2. Method according to Claim 1, wherein an operating mode of the fluid delivery device (4) during the operation of the fluid delivery device (4) is stored in an internal storage device (16), wherein the internal storage device (16) is read upon activation of the fluid delivery device (4) to set a recently used operating mode of the fluid delivery device (4).

3. Method according to Claim 1 or 2, wherein an emergency mode of the fluid delivery device (4) is switched on if the setpoint speed selection or the setpoint control-value selection of the fluid delivery device (4) exceeds the trigger value.

4. Method according to one of Claims 1 to 3, wherein the emergency mode of the fluid delivery device (4) is initiated by the central control unit (10) or the control module (14).

5. Method according to one of Claims 1 to 4, wherein an emergency-mode speed, for example in the form of a rated speed or maximum speed of the fluid delivery device (4), is set when the emergency mode of the fluid delivery device (4) is activated.

6. Pump arrangement (1), having at least one fluid delivery device designed as a pump (4) and a control module (14) connected to the pump (4) to actuate and/or regulate the pump (4), wherein the pump arrangement (1) is designed to execute the method (2) according to one of the preceding claims.

7. Valve arrangement, having at least one fluid delivery device designed as a valve and a control module (14) connected to the valve to actuate and/or regulate the valve, wherein the valve arrangement is designed to execute the method (2) according to one of Claims 1 to 5.

8. Compressor arrangement, having at least one fluid delivery device designed as a compressor and a control module (14) connected to the compressor to actuate and/or regulate the compressor, wherein the compressor arrangement is designed to execute the method (2) according to one of Claims 1 to 5.

9. Fan arrangement, having at least one fluid delivery device designed as a fan and a control module (14) connected to the fan to actuate and/or regulate the fan, wherein the fan arrangement is designed to execute the method (2) according to one of Claims 1 to 5.

10. Control module (14), wherein the control module (14) is designed to execute the method (2) according to one of Claims 1 to 5.

11. Computer program, which comprises commands which, when the computer program is executed by a computer or a control module (14), prompt this to execute the method (2) according to one of Claims 1 to 5.

12. Machine-readable storage medium on which the computer program according to Claim 11 is stored.

## Revendications

1. Procédé (2) permettant de faire fonctionner un dispositif de refoulement de fluide (4), en particulier une pompe, un ventilateur, un compresseur ou une soupape, par une unité de commande (14), dans lequel
- lorsqu'un fonctionnement de secours est désactivé, le dispositif de refoulement de fluide (4) est mis en marche au moins à l'application initiale d'une puissance de fonctionnement au dispositif de refoulement de fluide (4),
- une spécification de vitesse de rotation de consigne ou une spécification de valeur de réglage de consigne est reçue par un appareil de commande central (10) et transmise au dispositif de refoulement de fluide (4),
- le fonctionnement de secours du dispositif de refoulement de fluide (4) est activé si la spécification de vitesse de rotation de consigne ou la spécification de valeur de réglage de consigne dépasse une valeur de déclenchement ou le dispositif de refoulement de fluide (4) fonctionne pendant plus longtemps qu'une durée d'activation avec une vitesse de rotation invalide ou avec une valeur de réglage invalide.

2. Procédé selon la revendication 1, dans lequel un mode de fonctionnement du dispositif de refoulement de fluide (4) pendant le fonctionnement du dispositif de refoulement de fluide (4) est mémorisé dans une unité de mémoire interne (16), l'unité de mémoire interne (16) étant consultée lorsque le dispositif de refoulement de fluide (4) est activé pour régler un mode de fonctionnement utilisé en dernier du dispositif de refoulement de fluide (4).

3. Procédé selon la revendication 1 ou 2, dans lequel un fonctionnement de secours du dispositif de refoulement de fluide (4) est mis en marche si la spécification de vitesse de rotation de consigne ou la spécification de valeur de réglage de consigne du dispositif de refoulement de fluide (4) dépasse la valeur de déclenchement.

4. Procédé selon l'une quelconque des revendications 1 à 3, dans lequel le fonctionnement de secours du dispositif de refoulement de fluide (4) est lancé par l'appareil de commande central (10) ou l'unité de commande (14).

5. Procédé selon l'une quelconque des revendications 1 à 4, dans lequel, lorsque le fonctionnement de secours du dispositif de refoulement de fluide (4) est activé, une vitesse de rotation de secours est réglée, par exemple sous la forme d'une vitesse de rotation nominale ou d'une vitesse de rotation maximale du dispositif de refoulement de fluide (4).

6. Ensemble de pompe (1), présentant au moins un dispositif de refoulement de fluide réalisé en tant que pompe (4) et une unité de commande (14) reliée à la pompe (4) pour piloter et/ou réguler la pompe (4), dans lequel l'ensemble de pompe (1) est conçu pour exécuter le procédé (2) selon l'une quelconque des revendications précédentes.

7. Ensemble de soupape, présentant au moins un dispositif de refoulement de fluide réalisé en tant que soupape et une unité de commande (14) reliée à la soupape pour piloter et/ou réguler la soupape, dans lequel l'ensemble de soupape est conçu pour exécuter le procédé (2) selon l'une quelconque des revendications 1 à 5.

8. Ensemble de compresseur, présentant au moins un dispositif de refoulement de fluide réalisé en tant que compresseur et une unité de commande (14) reliée au compresseur pour piloter et/ou réguler le compresseur, dans lequel l'ensemble de compresseur est conçu pour exécuter le procédé (2) selon l'une quelconque des revendications 1 à 5.

9. Ensemble de ventilateur, présentant au moins un dispositif de refoulement de fluide réalisé en tant que ventilateur et une unité de commande (14) reliée au ventilateur pour piloter et/ou réguler le ventilateur, dans lequel l'ensemble de ventilateur est conçu pour exécuter le procédé (2) selon l'une quelconque des revendications 1 à 5.

10. Unité de commande (14), l'unité de commande (14) étant conçue pour exécuter le procédé (2) selon l'une quelconque des revendications 1 à 5.

11. Programme informatique comprenant des instructions qui, lorsque le programme informatique est exécuté par un ordinateur ou une unité de commande (14), font que celui-ci ou celle-ci exécute le procédé (2) selon l'une quelconque des revendications 1 à 5.

12. Support de stockage lisible par machine sur lequel est stocké le programme informatique selon la revendication 11.
